# EUROPÄISCHE PATENTANMELDUNG

(11) **EP 0 955 506 A2**
(43) Veröffentlichungstag der Anmeldung: **10.11.1999**
(21) Anmeldenummer: 99108838.6
(22) Anmeldetag: 04.05.1999
(51) Int. Cl.: F24J 2/08

(54) **Solar-Heizungsvorrichtung**

(30) Priorität: 06.05.1998 DE 29808142 U
(71) Anmelder: Kienle, Helmut, 71717 Beilstein (DE)
(72) Erfinder: Kienle, Helmut, 71717 Beilstein (DE)
(74) Vertreter: Müller, Hans, Dipl.-Ing.

(57) **Zusammenfassung**

Eine Solar-Heizungsvorrichtung enthält einen Heizkörper (50) beziehungsweise Heizleitungen und eine Vielzahl von Sammellinsen (40). Der Heizkörper (50) beziehungsweise die Heizleitungen sind in einem geschlossenen Kreislauf mit einem Wärmetauscher verbunden und werden von einem aufheizbaren Medium durchflossen. Das Medium wird durch die Licht- beziehungsweise Sonnenstrahlen, die durch die Sammellinse hindurchgehen, aufgeheizt. Die Brennpunkte (44) beziehungsweise Brennebenen (88) der Linsen (40) liegen auf der Außenfläche des Heizkörpers (50) oder weisen einen einstellbaren Abstand (76) von der Außenfläche (52) des Heizkörpers (50) beziehungsweise der Sammelleitungen auf.

## Beschreibung

### TECHNISCHES GEBIET

Die Erfindung betrifft eine Solar-Heizungsvorrichtung. Mit einer derartigen Heizvorrichtung läßt sich die Sonnenstrahlung zur Erzeugung von Wärme nutzen. Die Nutzung der praktisch unerschöpflich und "kostenlos" zur Verfügung stehenden Sonnenenergie stellt einen zur Zeit kleinen aber nicht unerheblichen Beitrag zur Lösung der langfristig existierenden Energieprobleme dar.

### STAND DER TECHNIK

Es ist bekannt, die Sonnenenergie durch den Einsatz von Wärmepumpen zu nutzen. Mit Wärmepumpen kann die durch die Sonneneinstrahlung erzeugte Umweltwärme aus der Umgebungsluft oder beispielsweise aus dem Erdreich gewonnen werden. Neben dieser indirekten Nutzung ist auch eine direkte Nutzung der Sonnenstrahlen bekannt. So wird Wärmeenergie über beispielsweise auf Hausdächern befestigte Kollektoren gewonnen. Die von der Sonne ausgehende Lichtstrahlung wird von der Absorberoberfläche des Kollektors in Wärme umgesetzt. Im Absorber sind Wärmetauscherleitungen vorhanden, über die die nutzbare Kollektorwärme mit Hilfe eines Wärmeträger-Mediums vom Kollektor weg und beispielsweise zum Aufheizen des in einem Haushalt benötigten Brauchwassers verwendet werden kann. Mit den Kollektoren läßt sich Brauchwasser allerdings nicht beliebig hoch aufheizen.

### DARSTELLUNG DER ERFINDUNG

Ausgehend von diesem vorbekannten Stand der Technik liegt der Erfindung die Aufgabe zu Grunde, eine Solar-Heizvorrichtung anzugeben, mit der sich möglichst hohe Brauchwassertemperaturen erzielen lassen.

Diese Erfindung ist durch die Merkmale des Anspruchs 1 gegeben. Weiterbildungen der Erfindung sind Gegenstand von Unteransprüchen.

Die erfindungsgemäße Solar-Heizvorrichtung nutzt die Erkenntnis, dass sich durch Sammellinsen die parallelen Sonnenstrahlen in einem Punkt sammeln lassen und dass sich dadurch eine Sammellinse als Brennglas verwenden läßt. Die in einem Brennpunkt zusammengeführten Sonnenstrahlen können dadurch bekanntermaßen zum Entzünden von Materialen verwendet werden. Im Bereich des Brennpunktes können sehr hohe Temperaturen erzeugt werden. Bei der erfindungsgemäßen Solar-Heizvorrichtung wird nun eine Vielzahl von Sammellinsen so angeordnet, dass die Brennpunkte der Linsen auf der Außenwand eines Heizkörpers liegen oder einen einstellbaren Abstand von dieser Außenwand aufweisen. Auf dem Heizkörper liegen dann eine entsprechend große Anzahl von Brennpunkten, in denen extrem hohe Temperaturen durch Sonnenstrahlen erzeugt werden können. Die Außenwand des Heizkörpers läßt sich damit extrem stark Aufheizen, so dass der von der Außenwand des Heizkörpers eingeschlossene Innenraum, der mit einem aufheizbaren Medium geführt ist, sehr stark aufgeheizt werden kann. Die Sonneneinstrahlung ist bezogen auf eine Sammellinse extrem stark, wenn die Sonnenstrahlen parallel zur optischen Achse der Sammellinsen verlaufen. Die Mittelebene der Sammellinsen steht dann senkrecht zu den einfallenden Sonnenstrahlen. Sofern zwischen Mittelebene der betreffenden Sammellinse und in den einfallenden Strahlen ein Winkel größer beziehungsweise kleiner als 90° vorhanden ist, liegt der Brennpunkt nicht mehr auf der optischen Achse sondern auf der durch die Brennachse gehenden und senkrecht zur optischen Achse ausgerichteten Brennebene. Auch bei solchen "schräg" auf die Sammellinse einfallenden Sonnenstrahlen können sich diese Sonnenstrahlen in einem Punkt auf der Außenwand eines Heizkörpers treffen. Allerdings ist die Menge der "schräg" einfallenden Sonnenstrahlen kleiner als die Menge an Sonnenstrahlen, die parallel zur optischen Achse der betreffenden Sammellinse ausgerichtet sind. Je "schräger" die Sonnenstrahlen auf einer Sammellinse auftreffen, desto weniger läßt sich ein Heizkörper aufheizen.

Um eine großflächige Aufheizung eines beispielsweise flächigen Heizkörpers zu erreichen, sind eine Vielzahl von Sammellinsen innerhalb einer Platte angeordnet. Die Brennpunkte beziehungsweise die Ebenen der Linsen liegen vorteilhafter Weise in einer gemeinsamen Ebene. Diese gemeinsame Ebene kann dann die Außenfläche eines Heizkörpers sein. Sofern der Heizkörper eine strukturierte Oberfläche besitzt, können die Sammellinsen entsprechend versetzt zueinander ausgerichtet ein.

Nach einer ersten, wirtschaftlich einfachen Ausführungsform der Erfindung sind die Linsen mit der Platte als einteiliger Linsenkörper vorhanden. Da die optische Qualität der Linsen nicht extrem hoch sein muß, können die Linsen auch aus Kunststoff hergestellt sein. Gerade aus Kunststoff hergestellte Linsen können wirtschaftlich besonders einfach zu mehreren als einteilige Platte ausgebildet werden.

Nach einer anderen wirtschaftlich sehr interessanten Ausführungsform der Erfindung sind die Linsen reihenweise, jeweils zu mehreren hintereinanderliegend, in entsprechend abgekanteten Blechprofilen gehalten. Eine diese Ausführungsform zeigende Ausbildung ist in der Zeichnung dargestellt und in der zugehörigen Figurenbeschreibung näher beschrieben. Die Brennpunkte einer jeden Reihe von Linsen gemäß dieser zweiten Ausführungsform liegen jeweils auf Leitungen, die einen Heizkörper verkörpern und die in einem geschlossenen Kreislauf mit einem Wärmetauscher verbunden sind.

Um die Linsen vor Beschädigung zu schützen, können sie außen von einer für Sonnenstrahlen durchlässigen Schutzplatte abgedeckt sein.

Um die eingangs genannte optimale Ausrichtung der Sammellinsen zum Stand der Sonne während eines Tages zu gewährleisten, ist es sinnvoll, die Sammellinsen zusammen mit dem Heizkörper verschwenkbar anzuordnen, um sie in Ost-West-Richtung und gegebenenfalls auch noch in Nord-Süd-Richtung dem jeweiligen Sonnenstand entsprechend ausrichten zu können. Das Verstellen kann mittels beispielsweise eines Elektromotors erfolgen.

In einem auch in der Zeichnung dargestellten Ausführungsbeispiel ist ein geschlossener Kreislauf für ein aufheizbares Wärmeträger-Medium vorhanden. Das Medium durchströmt dabei den von den Sonnenstrahlen aufheizbaren Heizkörper und anschließend einen Wärmetauscher. In dem Wärmetauscher kann die Wärme des aufgeheizten Mediums an beispielsweise in einem Haushalt benötigtes Brauchwasser abgegeben werden.

In dem aufheizbaren Medium kann ein Frostschutzmittel enthalten sein um zu verhindern, dass das aufheizbare Medium an einer beispielsweise im Freien aufgestellten Solar-Heizvorrichtung einfrieren kann.

Eine in dem geschlossenen Kreislauf des Wärmeträger-Mediums eingebaute Umwälzpumpe kann so geschaltet werden, dass sie nur dann wirksam ist, wenn die Temperatur im Heizkörper höher ist als im Wärmetauscher. Dadurch wird verhindert, dass Wärme aus dem Bereich des Wärmetauschers in einen demgegenüber kälteren Heizkörper zurück fließt und damit zum Aufheizen von Brauchwasser nicht mehr zur Verfügung steht.

Weitere Merkmale und Vorteile der Erfindung sind den in den Ansprüchen ferner aufgeführten Merkmalen sowie dem nachstehenden Ausführungsbeispiel zu entnehmen.

### KURZE BESCHREIBUNG DER ZEICHNUNG

Die Erfindung wird im folgenden anhand des in der Zeichnung dargestellten Ausführungbeispiels näher beschrieben und erläutert. Es zeigen:

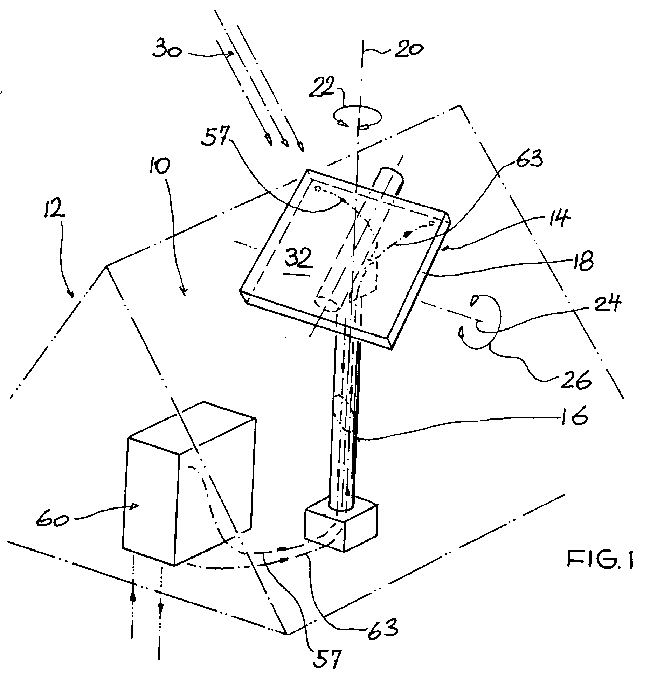

- Fig. 1: eine schematisierte Ansicht einer im Bereich eines Hausdaches vorhandenen Solar-Heizvorrichtung nach der Erfindung in einer ersten Ausführungsform,
- Fig. 2: einen schematisierten Schnitt durch die Solar-Heizvorrichtung nach Fig. 1,
- Fig. 3: eine Teilansicht der in Fig. 2 dargestellten Sammellinsen-Platte nach der Erfindung,
- Fig. 4: eine Darstellung des Strahlenganges durch eine Sammellinse nach der Erfindung für unterschiedliche Sonnenstände,
- Fig. 5: eine schematisierte Ansicht einer in Reihen angeordneten Anordnung von Linsen gemäß einer zweiten Ausführungsform der Erfindung und
- Fig. 6: eine perspektivische Ansicht einer einzelnen Linse gemäß Fig. 5.

### WEGE ZUM AUSFÜHREN DER ERFINDUNG

Durch das Dach 10 eines Gebäudes 12 ragt eine Solar-Heizvorrichtung 14 mit ihrem Ständer 16 ins Freie heraus.

An dem freien Ende des Ständers 16 ist ein kastenförmiger Kollektor 18 befestigt. Dieser Kollektor 18 kann um eine vertikale Achse 20 verschwenkt werden (Doppelpfeil 22). Außerdem läßt sich der Kollektor 18 um eine dazu senkrecht verlaufende Achse 24 nach oben und unten Kippen (Doppelpfeil 26). Durch Verschwenken um die Achse 20 läßt sich der Kollektor 18 in Ost-West-Richtung und umgekehrt verstellen. Eine Verstellung uni die Achse 24 richtet den Kollektor 18 in Nord-Süd-Richtung beziehungsweise umgekehrt aus. Dadurch läßt sich gewährleisten, dass Sonnenstrahlen 30 immer senkrecht zu der den Kollektor 18 außen bedeckenden Platte 32 ausgerichtet sind.

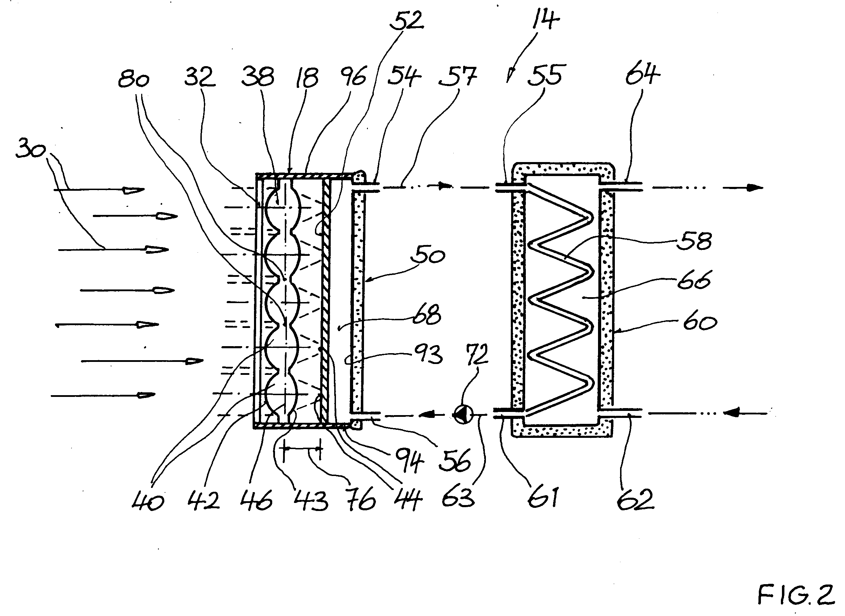

Die Platte 32 ist eine für Sonnenstrahlen durchlässige Schutzplatte für eine gemäß Fig. 2 dahinter im Kollektor 18 befindliche Sammellinsenplatte 38. Diese Sammellinsenplatte 38 besitzt eine Vielzahl von nebeneinander angeordneten Sammellinsen 40. Im vorliegenden Beispielsfall besitzen die Sammellinsen 40 nach außen hin, also in Richtung zur Schutzplatte 36 eine stärker gewölbte Oberfläche 42 als auf ihrer dazu gegenüberliegenden Oberfläche 43. Durch die Sammellinsen 40 werden die Sonnenstrahlen 30 hinter der Sammellinsenplatte 38 in Punkten 44 gesammelt. Diese Punkte 44 sind die Brennpunkte der einzelnen Linsen 40 für senkrecht auf die Linsenplatte 38 ausgerichtete Sonnenstrahlen 30. Die Punkte 44 liegen damit in einer Ebene, die parallel zur Mittelebene 46 der Sammellinsen 40 ausgerichtet ist.

Die Punkte 44 liegen gemäß Fig. 2 auf der Außenfläche 52 eines Heizkörpers 50. Durch die Sonnenstrahlen 30 läßt sich damit die Außenfläche 52 im Bereich der Punkte 44 extrem aufheizen. Der Heizkörper 50 ist im vorliegenden Beispielsfall gemäß Fig. 2 als Platten-Heizkörper ausgebildet. An seinem oberen Ende ist ein Auslauf 54 und an seinem unteren Ende ein Einlauf 56. Auslauf 54 und Einlauf 56 sind mit einer wendelförmigen Leitung 58 verbunden, die innerhalb eines Behältnisses 60 angeordnet ist.

Der Auslauf 54 des Heizkörpers 50 ist durch eine Leitung 57 mit einem Einlauf 55 der wendelförmigen Leitung 58 in dem Behältnis 60 verbunden. In entsprechender Weise ist der Einlauf 56 des Heizkörpers 50 über eine Leitung 63 mit dem Auslauf 61 der wendelförmigen Leitung 58 in dem Behältnis 60 verbunden. Der Innenraum 68 des Heizkörpers 50 stellt mit der wendelförmigen Leitung 58 über die beiden Leitungen 57, 63 einen geschlossenen Kreislauf für das aufheizbare Medium dar.

Das Behältnis 60 besitzt an seinem unteren Ende ein Einlauf 62 und an seinem oberen Ende einen Auslauf 64. Durch den Einlauf 62 kann Frischwasser in den Innenraum 66 des Behältnisses 60 eingeleitet werden. Dieses Frischwasser kann dann durch den Auslauf 64 entnommen werden.

Bei Betrieb der Solar-Heizvorrichtung 14 wird das in dem Innenraum 68 des Heizkörpers 50 vorhandene flüssige Medium aufgeheizt. Dieses Medium durchströmt die wendelförmige Leitung 58 innerhalb des Behältnisses 60 und heizt dadurch das im Innenraum 66 dieses Behältnisses 60 vorhandene Wasser auf. Das Behältnis 60 stellt also einen Wärmetauscher dar.

In der Leitung 63 ist eine Umwälzpumpe 72 eingebaut. Durch eine in der Zeichnung nicht näher dargestellte Steuerungseinrichtungen wird sichergestellt, dass die Umwälzpumpe 72 nur dann in Betrieb ist, dass sie also nur dann "läuft", wenn die Temperatur im Innenraum 68 des Heizkörpers 50 höher ist als die Temperatur im Innenraum 66 des Wärmetauschers.

Der Abstand 76 zwischen der Mittelebene 46 der Sammellinsenplatte 38 und der Außenfläche 52 des Heizkörpers 50 läßt sich vergrößern oder verkleinern. Dadurch lassen sich die Punkte 44 flächenmäßig vergrößern oder verkleinern.

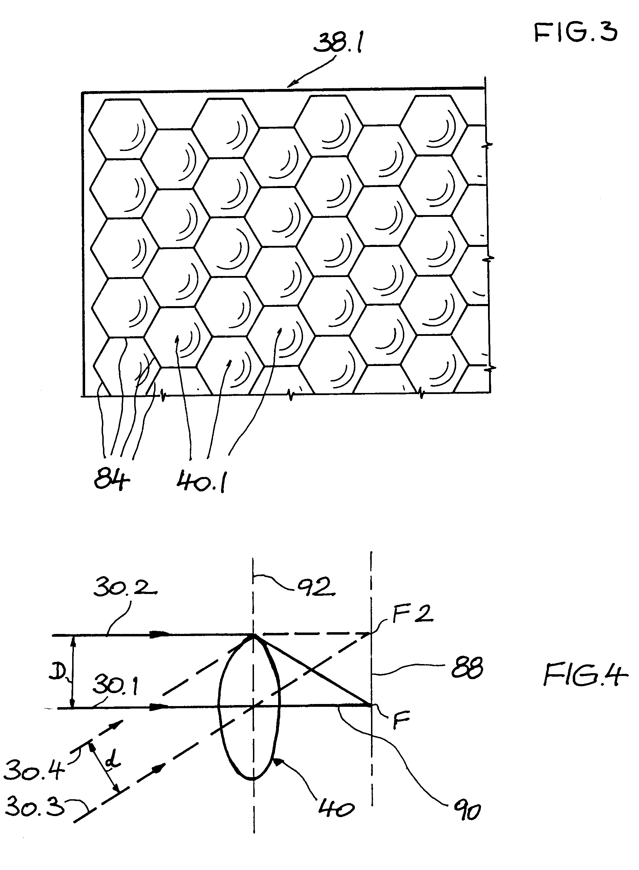

Während bei der Darstellung gemäß Figur 2 die Sammellinsenplatte 38 aus einzelnen Sammellinsen 40 besteht, die untereinander über stegartige Verbindungsbereiche 80 miteinander verbunden sind, sitzen bei der in Figur 3 dargestellten Sammellinsen-Platte 38.1 die einzelnen Sammellinsen 40.1 über gemeinsame Berührflächen 84 dicht aneinander. Die Berührflächen 84 bilden im vorliegenden Fall ein Sechseck. Die Linsen 40.1 sind umfangsmäßig entsprechend "abgeschnitten". Auf diese Weise lassen sich sehr eng beieinander stehende und wünschenswert viele Sammellinsen 40.1 in einer Platte 38.1 anordnen.

In Figur 4 ist der Querschnitt einer Sammellinse 40 schematisiert dargestellt. In der optischen Achse 90 der Sammellinse 40 liegt der Sonnenstrahl 30.1, der senkrecht auf der Mittelebene 92 der Sammellinse 40 steht. Dieser Sonnenstrahl 30.1 geht durch den Brennpunkt F der Sammellinse 40. Ein parallel zum Sonnenstrahl 30.1 verlaufender oberer Randstrahl 30.2 hat einen Abstand D vom Sonnenstrahl 30.1. Dieser obere Randstrahl 30.2 trifft im Brennpunkt F mit dein in der optischen Achse 90 verlaufenden Strahl 30.1 zusammen. Der Brennpunkt F stellt einen in Figur 2 dargestellten Punkt 44 dar.

Nicht parallel zur optischen Achse 40 verlaufende Sonnenstrahlen 30.3 und 30.4 treffen sich hinter der Sammellinse 40 in einem Punkt F₂. Die Punkte F₂ und F liegen in einer gemeinsamen Brennebene 88, die senkrecht auf der optischen Achse 90 steht. Der Strahl 30.3 geht durch den Mittelpunkt M der Sammellinse 40 und trifft geradlinig auf den Punkt F₂. Ein zu diesem Strahl 30.3 paralleler oberer Randstrahl 30.4 trifft im Punkt F₂ mit dem Strahl 30.3 zusammen. Der Abstand d zwischen den beiden Strahlen 30.3 und 30.4 ist kleiner als der Abstand D zwischen den Strahlen 30.1 und 30.2. Daraus wird ersichtlich, dass die Heizleistung der Solar-Heizvorrichtung 14 am größten ist, wenn die Mittelebene 92 senkrecht zu parallel einfallenden Sonnenstrahlen 30.1, 30.2 ausgerichtet ist.

Um Heizverluste zu reduzieren, sind die von der Sammellinsen-Platte 38 weggerichtete Rückwand 93 und die beiden Seitenwände 94, 96 des Heizkörpers 50 mit einer Isolierung versehen. Auch die Außenwand des Behältnisses 60 vom Wärmetauscher ist wärmegedämmt ausgebildet.

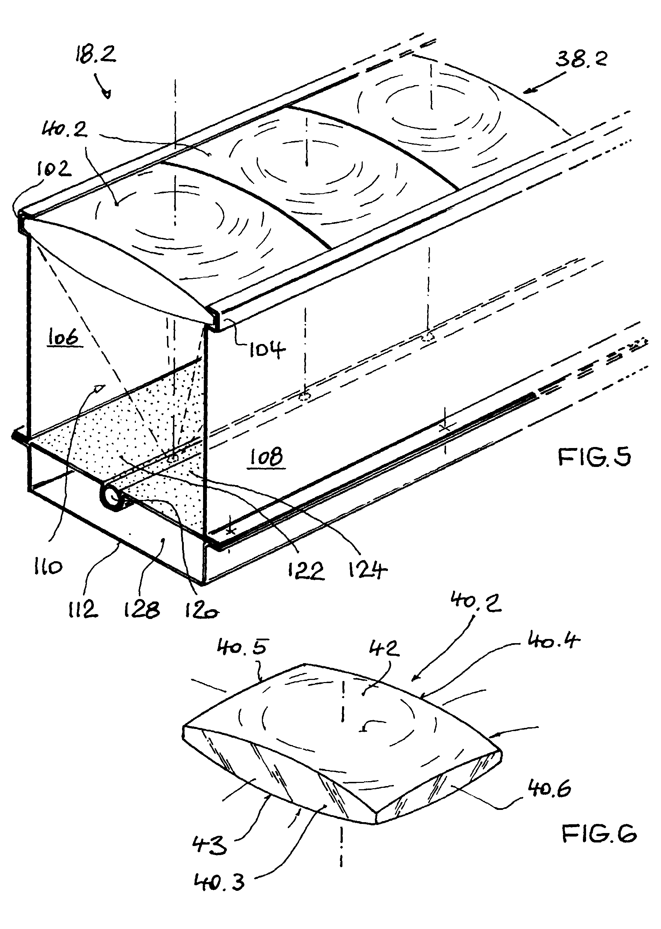

Bei dem in Fig. 5 dargestellten Kollektor 18.2 sind die einzelnen Linsen 40.2 reihenweise angeordnet. Eine dieser Reihen ist in Fig. 5 zeichnerisch angedeutet. Jede Sammellinse 40.2 besitzt gegenüberliegende Seitenflächen 40.3 und 40.4, die parallel zueinander ausgerichtet sind. Im vorliegenden Fall ist die Grundfläche einer jeden Sammellinse 40.2 rechteckförmig. Daher sind auch die beiden anderen Umrissflächen der Linse 40.2, die rechtwinklig zu den ebenen Seitenflächen 40.3 und 40.4 stehen, als ebene Flächen 40.5 und 40.6 ausgebildet. Die obere und untere Grundfläche der Linse 40.2 besitzt eine gewälbte Oberfläche 42 beziehungsweise 43, so wie das vorstehend im Zusammenhang mit der Linse 40 bereits beschrieben ist.

Die Linsen 40.2 einer Sammellinsenreihe 38.2 sind in nach innen gerichteten, U-förmigen Umkantungen 102, 104 eingeschoben gehalten (Fig. 5). Mit ihren ebenen Seitenflächen 40.3, 40.4 stoßen benachbarte Linsen 40.2 stumpf aneinander. Die oberen Umkantungen 102 beziehungsweise 104 bilden die oberen Endbereich von zwei Blechplatten 106 beziehungsweise 108, die entsprechend der Größe der Linsen 40.2 parallel zueinander ausgerichtet sind. Die Blechplatten 106, 108 bilden die Seitenwände eines Kanals 110, der oben durch eine Reihe von Linsen 40.2 verschlossen ist.

Im unteren Bereich dieses Kanals 110 ist ein U-förmiges Bodenblech 112 an den beiden seitlichen Blechplatten 106, 108 befestigt. Im Bereich dieses Bodenbleches 112 ist mittig eine Leitung 120 vorhanden, die von dem aufheizbaren Medium durchflossen wird und die in einem geschlossenen Kreislauf mit dem Wärmetauscher, wie beispielsweise dem Wärmetauscher 60, verbunden ist. Die Leitung 120 kann dabei direkt oder wie im vorliegenden Beispielsfall erst noch über eine Sammelleitung mit dem Wärmetauscher verbunden sein. Die Leitung 120 ist so zu den Linsen 40.2 ausgerichtet, dass die von den Linsen 40.2 gebrochenen Strahlen 30 auf der Leitung 120 auftreffen.

Auf der Leitung 120 liegen endseitig ein linkes und rechtes Blech 122, 124 auf. Die beiden Bleche 122, 124 sind dunkelfarbig beschichtet und absorbieren Lichtstrahlen. Auch Lichtstrahlen, die nicht auf die Leitung 120 sondern seitlich auf das Blech 122, 124 auftreffen, können dadurch das im Inneren der Leitung 120 vorhandene Medium noch aufheizen. Außerdem verhindern die beiden Bleche 122, 124, dass der durch die Leitung 120 sich relativ stark aufheizende Raum 128, der unterhalb der Blech 122, 124 vorhanden ist, seine Wärme ungenutzt nach oben abgeben kann. Die Anordnung der Bleche 122, 124 erlaubt die Verwendung von optisch nicht so präzisen Sammellinsen 40.2, da die Brennpunkte der Linsen 40.2 nicht zwingend "punktförmig" vorhanden sein müssen, sondern auch in mehr oder weniger größeren "Flecken" durch die Linse erzeugt werden können. Auf diese Weise ist es möglich, die in Fig. 6 vergrößert dargestellten, aus Kunststoff hergestellten Linsenkörper zu verwenden. Die gewölbten Oberflächen 42, 43 dieser Linsen 40.2 sind nicht geschliffen. Dadurch lassen sich wirtschaftlich sehr preiswerte Linsen 40.2 verwenden.

Die erfindungsgemäße Solar-Heizvorrichtung eignet sich insbesondere auch im Wintereinsatz.

## Patentansprüche

1. Solar-Heizvorrichtung,
enthaltend
- einen Heizkörper (50, 120),
- eine Vielzahl von Sammellinsen (40, 40.2), die so angeordnet sind, daß die Brennpunkte (44) beziehungsweise die Brennebenen (88) der Linsen (40, 40.2) für Sonnenstrahlen (30) auf der Außenfläche (52) des Heizkörpers (50, 120) liegen oder einen einstellbaren Abstand (76) von dieser Außenfläche (52) aufweisen.

2. Heizvorrichtung nach einem der vorstehenden Ansprüche,
**dadurch gekennzeichnet,** dass
- die Linsen (40) innerhalb einer Platte (38) angeordnet sind.

3. Heizvorrichtung nach Anspruch 1 oder 2,
**dadurch gekennzeichnet,** dass
- die Brennpunkte (44) beziehungsweise die Brennebenen (88) der Linsen auf einer gemeinsamen Ebene liegen.

4. Heizvorrichtung nach Anspruch 2,
**dadurch gekennzeichnet,** dass
- die Linsen (40) mit der Platte (38) einen einteiligen Linsenkörper bilden.

5. Heizvorrichtung nach Anspruch 2,
**dadurch gekennzeichnet,** dass
- die Linsen (40.2) in nebeneinander angeordneten Reihen (38.2) angeordnet sind.

6. Heizvorrichtung nach Anspruch 5,
**dadurch gekennzeichnet,** dass
- die in einer Reihe (38.2) vorhandenen Linsen (40.2) lose aneinanderstoßen.

7. Heizvorrichtung nach Anspruch 5 oder 6,
**dadurch gekennzeichnet,** dass
- die Grundfläche einer Linse (40.2) in etwa rechteckförmig oder quadratisch ist, mit zwei parallel zueinander ausgerichteten ebenen Seitenflächen (40.3, 40.4),
- benachbarte Linsen (40.2) einer Reihe (38.2) mit diesen Seitenflächen (40.3, 40.4) lose aneinanderliegen.

8. Heizvorrichtung nach einem der vorstehenden Ansprüche,
**dadurch gekennzeichnet,** dass
- die Linsen (40, 40.2) beziehungsweise der Linsenkörper (38.2) in nutartigen seitlichen Halterungen (102, 104) gelagert sind.

9. Heizvorrichtung nach Anspruch 8,
**dadurch gekennzeichnet,** dass
- zwei sich gegenüberliegende Blechplatten (106, 108) mit jeweils einer nutartigen Umkantung (102, 104) vorhanden sind,
- diese zwei Blechplatten (106, 108) durch eine U-förmige Boden-Blechplatte (112) zu einem insgesamt etwa U-förmigen Kanal (110) verbunden sind,
- innerhalb des von der U-förmigen Boden-Blechplatte (112) umschlossenen Raumes (128) eine Leitung (120) des Heizkörpers mit dem durch die Linsen (40.2) aufheizbaren Medium so angeordnet ist, dass
- die Brennpunkte einer Reihe (38.2) von Linsen (40.2) auf der Leitung (120) vorhanden sind.

10. Heizvorrichtung nach Anspruch 9,
**dadurch gekennzeichnet,** dass
- mehrere derartige Kanäle (110) hintereinanderliegend vorhanden sind,
- die Leitungen (120) in den einzelnen Kanälen (110) in eine Sammelleitung einmünden,
- eine derartige Sammelleitung als Einlauf-Leitung (56) beziehungsweise als Auslaut-Leitung (57) mit einem Wärmetauscher verbindbar ist.

11. Heizvorrichtung nach Anspruch 9,
**dadurch gekennzeichnet,** dass
- die jeweils seitlichen Bereiche zwischen der in der U-förmigen Boden-Blechplatte (112) befindlichen Leitung (120) und den den Kanal (110) seitlich begrenzenden Blechplatten (106, 108) durch eine plattenförmige Abdeckung (122,124) abgedeckt sind.

12. Heizvorrichtung nach Anspruch 11,
**dadurch gekennzeichnet,** dass
- die Abdeckung (122, 124) Lichtstrahlen absorbierend ist.

13. Heizvorrichtung nach Anspruch 11 oder 12,
**dadurch gekennzeichnet,** dass
- die Abdeckung (122, 124) wärmeleitenden Kontakt zu der Leitung (120) hat.

14. Heizvorrichtung nach einem der vorstehenden Ansprüche,
**dadurch gekennzeichnet,** dass
- die Linsen (40) aus Kunststoff bestehen.

15. Heizvorrichtung nach einem der vorstehenden Ansprüche,
**dadurch gekennzeichnet,** dass
- die Linsen (40) beziehungsweise die Linsenplatte (38, 38.2) außen von einer für Sonnenstrahlen durchlässigen Schutzplatte (32) abgedeckt sind.

16. Heizvorrichtung nach einem der vorstehenden Ansprüche,
**dadurch gekennzeichnet,** dass
- der den Heizkörper (50), die Linsen (40, 40.2) und gegebenenfalls die Schutzplatte (32) enthaltende Baukörper (18) so ausrichtbar ist, daß die Sonnenstrahlen (30) immer möglichst parallel zur optischen Achse (90) der Linsen (40, 40.2) auf die Linsen (40, 40.2) auftreffen.

17. Heizvorrichtung nach Anspruch 7,
**dadurch gekennzeichnet,** dass
- eine erste Verstelleinrichtung vorhanden ist zum Verschwenken (22) des Baukörpers (18) in Ost-West-Richtung und umgekehrt,
- eine zweite Verstelleinrichtung vorhanden ist zum Kippen (26) des Baukörpers (18) in Nord-Süd-Richtung und umgekehrt.

18. Heizvorrichtung nach Anspruch 17,
**dadurch gekennzeichnet,** dass
- die erste und/oder zweite Verstelleinrichtung zumindest einen elektrischen Motor enthält.

19. Heizvorrichtung nach einem der vorstehenden Ansprüche,
**dadurch gekennzeichnet,** dass
- ein geschlossener Kreislauf (68, 57, 58, 63) für ein aufheizbares Wärmeträger-Medium vorhanden ist,
- das Medium den Heizkörper (50, 120) und einen Wärmetauscher (60) durchströmt.

20. Heizvorrichtung nach Anspruch 19,
**dadurch gekennzeichnet,** dass
- das Medium Wasser und Frostschutzmittel enthält.

21. Heizvorrichtung nach Anspruch 19,
**dadurch gekennzeichnet,** dass
- eine Umwälzpumpe (72) im geschlossenen Kreislauf vorhanden ist,
- eine Temperaturdifferenz-Steuerungseinrichtung für die Pumpe (72) vorhanden ist, durch die die Pumpe (72) solange im Pumpenbetrieb arbeitet, wie die Temperatur im Heizkörper (50, 120) höher ist als die Temperatur im Wärmetauscher (60).
